# EUROPÄISCHE PATENTSCHRIFT

(11) **EP 2 744 348 B1**
(45) Veröffentlichungstag und Bekanntmachung des Hinweises auf die Patenterteilung: **04.10.2017**
(21) Anmeldenummer: 12748226.3
(22) Anmeldetag: 17.08.2012
(51) Int. Cl.: A21B 3/13, A21B 3/15, A21B 5/02, A47J 37/06

(54) **BACKPLATTE FÜR BACKÖFEN**
BAKING PLATE FOR BAKING OVENS
PLAQUE DE CUISSON POUR FOURS

(30) Priorität: 18.08.2011 AT 11902011
(43) Veröffentlichungstag der Anmeldung: 25.06.2014
(73) Patentinhaber: Haas Food Equipment GmbH, 1210 Wien (AT)
(72) Erfinder: REINHART, Adam, A-1030 Wien (AT); HAAS, Johannes, A-1040 Wien (AT); HAAS, Josef, A-2100 Leobendorf (AT); JIRASCHEK, Stefan, A-2202 Königsbrunn (AT); LICHTSCHEIDL, Manuel, A-1190 Wien (AT); OBERMAIER, Fritz, A-3500 Krems (AT)
(74) Vertreter: Puchberger & Partner Patentanwälte
(86) Internationale Anmeldenummer: PCT/EP2012/066088
(87) Internationale Veröffentlichungsnummer: WO 2013/024152

(56) Entgegenhaltungen:
- WO-A1-2011/000015
- DE-B- 1 271 053
- DE-U1-202010 009 320
- FR-A1- 2 905 824
- US-A1- 2009 114 796

## Beschreibung

Die Erfindung betrifft Backplatten für Backöfen zur Erzeugung von Backprodukten wie Weichwaffeln, knusprige Waffeln, Pfannkuchen und dergleichen. Derartige Backöfen umfassen in den Ausführungen für die industrielle Herstellung von Backprodukten üblicherweise eine Eingabestation, einen Backraum, eine Ausgabestation und eine Fördereinrichtung für die Backplatten, die entlang einer durch den Backraum führenden Umlaufbahn angeordnet sind. Backöfen dieser Art werden für die Herstellung von sehr unterschiedlichen Produkten eingesetzt. Eine Produktgruppe umfasst Pfannkuchen, Palatschinken, etc. Eine andere Produktgruppe umfasst weiche Waffeln, american pancakes, canadian pancakes, etc. Eine weitere Produktgruppe umfasst knusprig-spröde Waffeln wie z.B. knusprig-spröde Waffelblätter, knusprig-spröde Flachwaffeln, die zahlreiche Hohlkörperhälften enthalten, etc. Weiters können derartige Backöfen auch zur Herstellung von nach der Waffelbacktechnologie hergestellte Verpackungsteile wie Blätter, Tassen, etc. verwendet werden. Weiters gibt es noch Produktgruppen mit knusprig-spröden Waffeln, die aus im backwarmen Zustand plastisch verformbaren flachen Waffeln hergestellt werden, die im backwarmen Zustand in Hohlkörper umgeformt und dann als Hohlkörper erstarren gelassen werden.

Bei derartigen Backöfen kann die für den Backvorgang erforderliche Hitze im Backraum auf verschiedene Weise erzeugt werden, beispielsweise durch Gasheizung, elektrische Heizung oder durch elektrische Induktion.

Bei Backöfen und den zugehörigen Backplatten ist es wichtig, die optimalen Backbedingungen über einen möglichst langen Zeitraum und möglichst über die gesamte Laufdauer des Backofens zu gewährleisten. Für den Backvorgang muss eine stets gleich bleibende Wärmemenge an den Teig herangeführt werden, die Backprodukte müssen für viele Anwendungszwecke maßgenau hergestellt werden und das Backprodukt und etwaige Ausschussteile neben den Backprodukten müssen bei der oder nach der Entnahmestation leicht abnehmbar und entfernbar sein. Insbesondere das Entfernen fehlgebackener Produkte und von Verschmutzungen stellt bei herkömmlichen Backplatten, die üblicherweise aus Grauguss mit bearbeiteter und eventuell vergüteter Oberfläche bestehen, ein Problem dar. Eine nicht entfernte oder nicht entfernbare Verunreinigung kann alle nachfolgend gebackenen Backprodukte unbrauchbar machen, was üblicherweise zu einem Stillstand des Backofens und damit verbundener Produktionsunterbrechung führt.

Zur Vermeidung dieser Schwierigkeiten ist es schon früher vorgeschlagen worden, die Oberfläche von Backplatten so auszubilden, dass der Teig und die daraus gebildeten Backprodukte möglichst leicht wieder von der Oberfläche abgelöst werden können. Die DE 42 08 382 A1 zeigt die Beschichtung von Backplatten zum Backen von Waffelblättern, wobei die Backplatte aus Stahl oder Stahiguss besteht und mit einer glatten lebensmittelechten keramischen Deckschicht versehen wird. Weiters ist dort geoffenbart, über die keramische Deckschicht noch eine lebensmittelechte Kunststoffschicht vorzusehen. Eine solche großflächige Beschichtung ist allerdings nachteilig. Zum Einen ist eine großflächige Keramikbeschichtung von Metallplatten bei der Herstellung problematisch. Dies gilt sowohl hinsichtlich Maßgenauigkeit als auch Standfestigkeit der Keramikoberfläche. Im Betrieb kommt es in einem Backofen zu Absplitterungen keramischer Überzüge und Bildung von Ausschuss. Weiters ist das zusätzliche Beschichten mit Iebensmittelechtem Kunststoff kontraproduktiv, da dabei die möglicherweise erzielbaren Vorteile einer Keramikoberfläche verloren gehen. Überdies gibt die genannte Druckschrift keinerlei Angaben zur Natur der keramischen Schicht. Diesbezüglich ist die Offenbarung unvollständig.

Weiters ist es seit langer Zeit bekannt, Backformen aus Keramik zu bilden, wobei es sich üblicherweise um tonhaltige Keramiken handelt. Derartige Keramikgeschirre, die seit Jahrtausenden bekannt sind, sind für einen industriellen Backvorgang völlig unbrauchbar.

Die DE 60 2004 000 582 T2 beschreibt eine Backform mit keramischer Anti-Haftbeschichtung, wobei es sich um eine Brotbackmaschine handelt. Bei der Anti-Haftbeschichtung handelt es sich um eine bei niederen Temperaturen gesinterte Keramikschicht, die auf einer dünnwandigen Backform aus Metall aufgetragen ist. Wenn die Keramikschicht beschädigt wird, muss die gesamte Backform verworfen werden. Eine Druckbelastung durch das Backgut kann von derartigen Backformen nicht aufgenommen werden, was beim drucklosen Brotbacken auch nicht notwendig ist. Auch diese Druckschrift gibt keinen Hinweis auf die Art des Sintermaterials, sodass diesbezüglich die Offenbarung unvollständig ist. Die geoffenbarte Brotbackform gibt keine Anregung wie eine Backplatte für die Waffelherstellung gebildet sein soll.

Die DE 20 2010 009320 U1 zeigt ein Backblech für die Herstellung von Muffins, wobei das Backblech Löcher aufweist, in die die Muffinförmchen nur lose eingehängt sind. Dieses lose Einhängen von Förmchen ist notwendig, weil bekanntlich Muffins gemeinsam mit der Form aus dem Backblech herausgenommen werden und entweder zusammen mit der Form in den Verkauf gelangen oder nach Erkalten der Backware aus dem Förmchen herausgelöst werden. Der Einsatz eines solchen Backblechs in die erfindungsgemäße Backvorrichtung für Waren wie Waffeln ist völlig undenkbar.

Die US 2009/114796 A1 zeigt Backformen aus Keramik, wie sie seit langer Zeit verwendet werden. Für industrielle Backöfen sind solche Backformen ungeeignet.

Die WO 2011/00015 A1 stellt den nächstliegenden Stand der Technik dar und offenbart Backplatten, die aus Glas oder Glaskeramik bestehen.

Die DE 1 271 053 B offenbart eine Backvorrichtung für Waffeltüten.

Die beschriebenen Nachteile des Standes der Technik sollen gemäß vorliegender Erfindung beseitigt werden. Insbesondere soll eine Backplatte für industrielle Backöfen geschaffen werden, bei der das Backprodukt nach dem Backprozess leicht und sicher restlos abgenommen werden kann und wobei in den nachfolgenden Reinigungsschritten wie z.B. dem Ausblasen mit Druckluft sicher alle Backreste entfernt werden. Oberflächenbehandlungen wie Fetten oder zusätzliche Beschichtungen sollen vermieden werden. Weiters soll eine Umrüstung der Backplatte oder eine etwaige Reparatur leicht und rasch möglich sein. Weiters ist es ein Ziel, die Backeinsätze so zu gestalten, dass der Wärmetransport innerhalb der Backplatte zum Backgut gleichmäßig und mit ausreichender Geschwindigkeit sicher gestellt ist.

Die eingangs genannte Backplatte weist die Merkmale auf, dass die Backplatte eine Trägerplatte und ein oder mehrere an dieser angeordneten Backeinsätze, die in Einsatzausnehmungen der Trägerplatte eingesetzt und die zur Aufnahme des zu backenden Teiges ausgebildet sind, und dass die Backeinsätze aus Sinterkeramik - gebildet sind. Die Backeinsätze sind in Einsatzausnehmungen der Trägerplatte eingesetzt und die Trägerplatte ist aus einem Material, bevorzugt Metall, besonders bevorzugt Grauguß gebildet, dessen Wärmedehnung gleich oder größer als die Wärmedehnung der Backeinsätze ist. Die Backeinsätze können einen Wärmeausdehnungskoeffizienten α < 9 [10⁻⁶ x K⁻¹] und die Trägerplatte einen Wärmeausdehnungskoeffizienten α > 9 [10⁻⁶ x K⁻¹] für den Temperaturbereich 20 bis 200°C aufweisen. Bevorzugt weisen die Backeinsätze einen Wärmeausdehnungskoeffizienten von etwa 3,2 [10⁻⁶ x K⁻¹] und die Trägerplatte einen Wärmeausdehnungskoeffizienten von etwa 12,5 [10⁻⁶ x K⁻¹] auf.

Die Backeinsätze sind gemäß Erfindung aus Siliziumnitrit oder Siliziumkarbid, bevorzugt aus gasdruckgesintertem Siliziumnitrit vom Typ AI/Y gebildet. Erfindungsgemäß sind die Einsatzausnehmungen in der Trägerplatte zur Aufnahme der Backeinsätze mit geringem Spiel ausgebildet, sodass die Backeinsätze passgenau einsetzbar und wieder herausnehmbar sind. Weiters können die Backeinsätze an der Backflächenseite mit der für das Backprodukt gewünschten Oberflächengestaltung und einer umlaufenden Dichtrippe sowie einem umlaufenden Seitenrand versehen sein. Die Backeinsätze werden in den Einsatzausnehmungen bevorzugt durch Laschen festgehalten, die mit der Trägerplatte fest, bevorzugt durch Schraubbolzen, verbunden und den Seitenrand der Backeinsätze übergreifend angeordnet sind. Der Seitenrand weist für jede Lasche eine Randausnehmung auf, wobei für jeden Backeinsatz zumindest zwei, bevorzugt drei oder vier Laschen und Randausnehmungen vorgesehen sind. Die Laschen können aus Metall, bevorzugt aus rostfreiem Stahl gebildet sein. Erfindungsgemäß weist jede Einsatzausnehmung ein Entlüftungsloch auf. Die Backplatten einer Backzange können in je einem Traggestell angeordnet sein, wobei das untere und obere Traggestell über ein Gelenk miteinander verbunden sind. Erfindungsgemäß ist die Backplatte Teil einer Backplattenzange, die eine untere und eine obere Backplatte aufweist, wobei deren Backeinsätze einander gegenüberliegend angeordnet sind, sodass nach dem Schließen der Backzange zwischen den einander zugeordneten Backeinsätzen der Raum für den Teig und für das daraus gebildete Backprodukt gebildet ist. Weiters liegt die Erfindung auch in der Schaffung eines Backofens mit einer durch den Backraum führenden Umlaufbahn für die Backplatten und einer Fördereinrichtung für die Backplatten, wobei eine oder mehrere der vorgenannten Merkmale aufweisen.

Nachfolgend wird die Erfindung beispielhaft näher beschrieben.
Fig. 1 ist eine schematische Seitendarstellung eines Backofens, wie er hier zum Einsatz kommen kann.
Fig. 2 zeigt eine Backzange in geöffnetem Zustand in Schrägansicht
Fig. 3 zeigt die Aufsicht auf die Backfläche einer unteren Backplatte und die
Fig. 4 und 5 zeigen Schnittdarstellungen gemäß den Schnitten A-A und B-B in Fig. 3.
Fig. 6 zeigt die Aufsicht auf die Backfläche einer oberen Backplatte und die
Fig. 7, 8 zeigen Schnittdarstellungen nach den Schnittlinien A-A, B-B in Fig. 6.
Die Fig.9 zeigt eine Darstellung der unteren Backplatte mit teilweise eingesetzten Backeinsätzen und teilweisen leeren Einsatzausnehmungen.

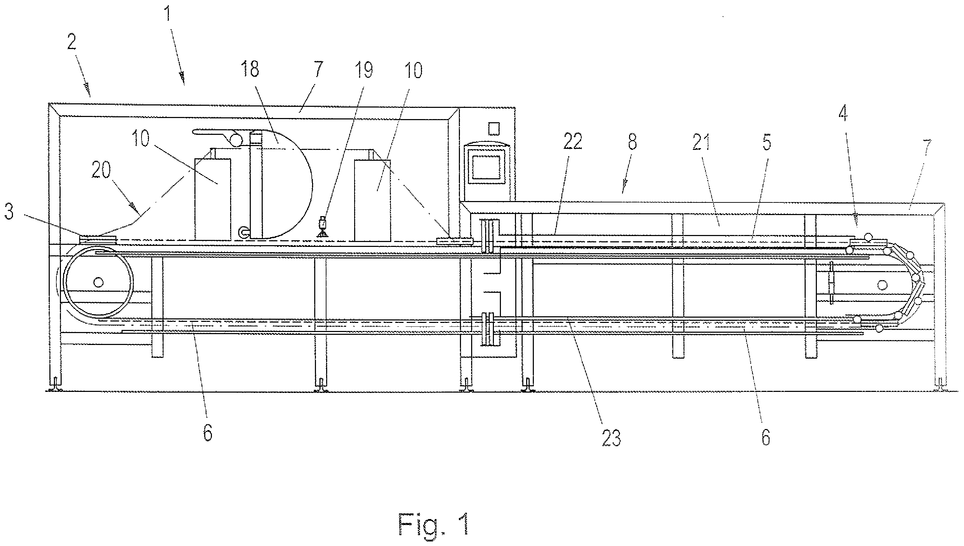

Die Fig. 1 zeigt einen Backofen 1 zur Herstellung von gebackenen Formkörpern, die beispielsweise als weiche Waffeln ausgebildet sind. Die weichen Waffeln werden aus einem flüssigen Waffeiteig in Backformen hergestellt, die jeweils aus einer unteren Backform und einer oberen Backform bestehen die gemäß Erfindung durch Backeinsätze in den Backplatten gebildet sind, wie später noch gezeigt wird.
Die Backformen sind in den Backzangen 3 einer endlosen Backzangenkette 4 aufgenommen. Die Backzangenkette 4 ist entlang einer Umflaufbahn angeordnet, die sich in zwei übereinander angeordneten horizontalen Transportbahnen 5, 6 durch den Backofen 1 erstreckt. Die Backzangenkette 4 ist in einen entlang der Umlaufbahn angeordneten Kettenförderer integriert, der die Backzangen 3 durch beide Transportbahnen 5, 6 befördert und über seine am vorderen und hinteren Ende des Backofens 1 angeordneten Kettenräder von einer Transportbahn in die andere umlenkt. Eine nähere Beschreibung derartiger Backöfen ist z.B. der WO/2009/100873 zu entnehmen.

Der Kettenförderer ist im langgestreckten Ofengestell 7 des Backofens 1 zwischen Seitenwänden des Ofengestells 7 angeordnet. Die Backzangen 3 sind im Kettenförderer zwischen zwei seitlichen Transportketten angeordnet und an deren Kettenlaschen befestigt. Von den Transportketten stehen nach außen Gelenksbolzen vor, an denen Laufräder drehbar gelagert sind, mit denen sich der Kettenförderer in beiden Transportbahnen jeweils auf in Ofenlängsrichtung verlaufenden Laufschienen abstützt, die an den beiden Seitenwänden des Ofengestells 7 befestigt sind.
In der vorderen Ofenhälfte 2 sind an der oberen Transportbahn 5 eine Ausgabestation 18, eine Eingabestation 19 und eine Einrichtung 20 zum Öffnen und Schließen der Backzangen 3 angeordnet. In der Ausgabestation 18 werden die weichen Waffeln aus den geöffneten Backzangen 3 entnommen. In der Eingabestation 19 wird Waffelteig, z.B. flüssig oder als Festteig in die geöffneten Backzangen 3 eingebracht. Nach der Eingabestation 19 werden die Backzangen 3 durch die Einrichtung 20 wieder geschlossen. Die geschlossenen Backzangen 3 werden vom Kettenförderer in der oberen Transportbahn 5 nach hinten zum hinteren Ende des Backofens 1 und in der unteren Transportbahn 6 nach vorne zum vorderen Ende des Backofens 1 befördert.

In der hinteren Ofenhälfte 8 ist der Backraum 21 des Backofens 1 untergebracht. Im Backraum 21 ist an der oberen Transportbahn 5 eine obere Backzone 22 und an der unteren Transportbahn 6 eine untere Backzone 23 angeordnet.

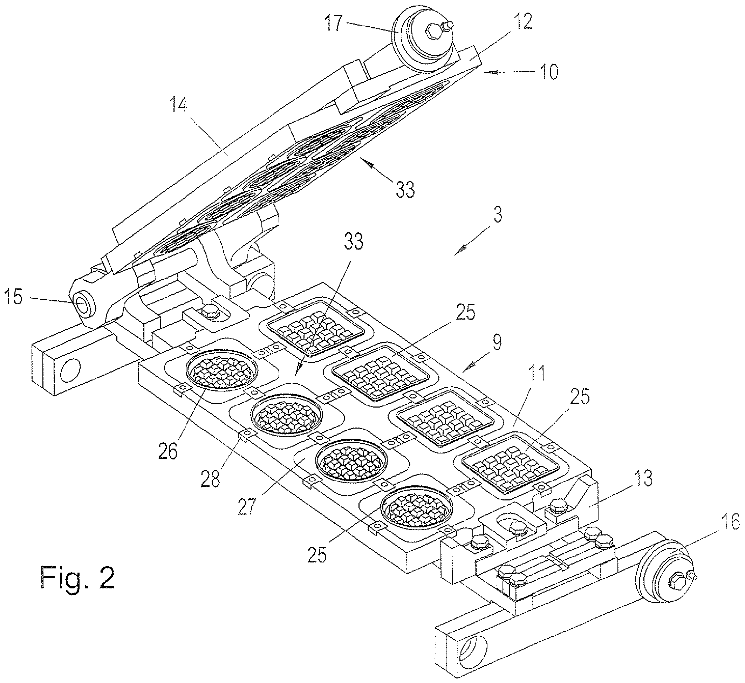

Die Fig. 2 zeigt eine erfindungsgemäße Backzange 3, wie sie in einem Ofen gemäß Fig. 1 oder in anderen Backöfen zum Einsatz kommen kann. Die Backzange 3 umfasst eine untere Backplatte 9 und eine obere Backplatte 10. Die beiden Backplatten umfassen je eine Trägerplatte, nämlich die untere Trägerplatte 11 und die obere Trägerplatte 12. Die Trägerplatten 11, 12 sind in Trägergestellen 13, 14 eingespannt, die über das Gelenk 15 klappbar sind. Gezeigt ist die geöffnete Stellung der Backzange und in dieser Stellung kann der Teig auf die untere Backplatte aufgetragen oder das fertige Backprodukt nach Durchlaufen des Backraums entnommen werden. In geöffnetem Zustand wird die Backzange z.B. mit Druckluft von etwaigen Backresten gereinigt.

Für das Rollen der Backzangen im Verbund der Backzangenkette sind an beiden Seiten der Backzange jeweils zwei Rollen 16 vorgesehen, von denen in Fig. 2 lediglich eine Rolle ersichtlich ist. Die Steuerung der Klappbewegung der Backzange erfolgt über die Steuerrolle 17 an der oberen Backplatte, die durch die Einrichtung 20 zum Öffnen und Schließen gesteuert wird.

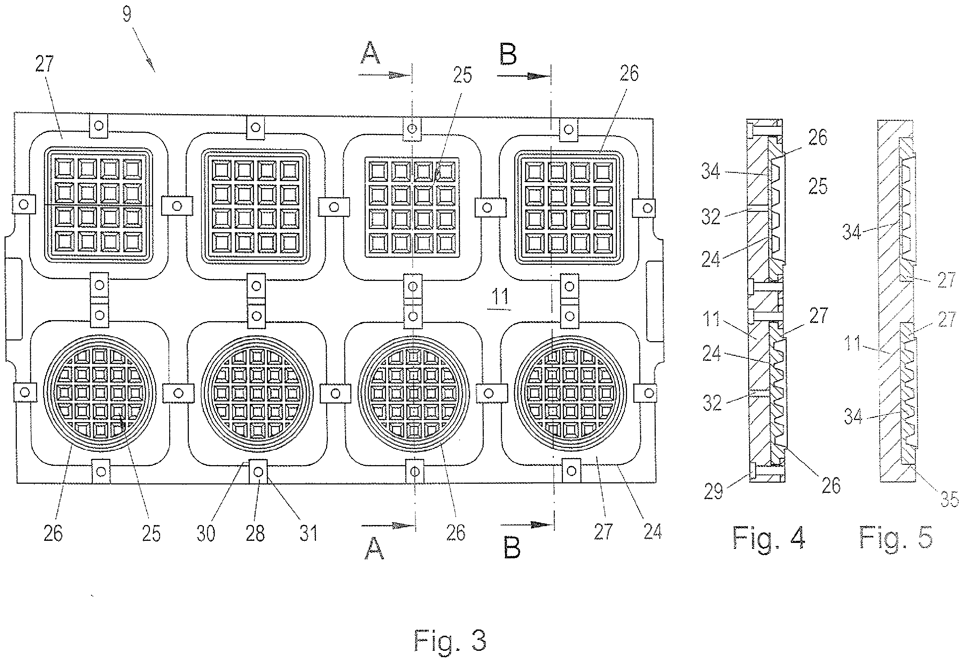

Wie schon in Fig. 2 erkennbar und in den Figuren 3 bis 9 im Detail dargestellt ist, weisen die Trägerplatten 11, 12, die z.B. aus einer massiven Graugussplatte oder Stahlplatte gebildet sind, Einsatzausnehmungen 24 auf, in denen die Backeinsätze 25 eingesetzt sind. Die Einsatzausnehmungen und die Backeinsätze sind zueinander mit geringem oder ohne Spiel ausgebildet, sodass die Backeinsätze passgenau einsetzbar sind und bevorzugt auch wieder herausnehmbar sind. Jeder Backeinsatz weist an der Backflächenseite 33 die für das jeweilige Backprodukt gewünschte Oberflächengestaltung und eine umlaufende Dichtrippe 26 auf. Der Bereich innerhalb der Dichtrippe bildet die Backform 34 zur Aufnahme des Teiges. Nach außen erstreckt sich jeweils ein umlaufender Seitenrand 27, der weitgehend plan in der Backflächenseite der Trägerplatte 11, 12 liegt. Gehalten werden die Backeinsätze 25 durch Laschen 28, die mittels Schraubbolzen 29 an der Trägerplatte angeschraubt sind und in eine Randausnehmung 30 des Backeinsatzes eingreifen. Die Laschen 28 sind weiters auch in entsprechenden Ausnehmungen 31 der Trägerplatte versenkt, sodass insgesamt eine weitgehend plane Oberfläche erzeugt wird.

Bei den dargestellten Ausführungsbeispielen ist jeder Backeinsatz von vier Laschen festgehalten. Je nach den räumlichen und kräftemäßigen Anforderungen können auch zwei oder drei Laschen genügen oder auch mehr Laschen vorgesehen sein.

Wenn in den Backplatten gemäß den Figuren 3 bis 9 auf einer Trägerplatte verschiedene Backformen gezeigt sind, nämlich eine Reihe runde Backformen und eine Reihe viereckige Backformen, dann soll dies nur veranschaulichen, dass die Form des Backproduktes und der zugehörigen Backformen beliebig gewählt werden kann. Im praktischen Einsatz wird es vorteilhaft sein, immer nur eine räumliche Ausbildung der Backformen für alle Backzangen auf der gleichen Backzangenkette vorzusehen.

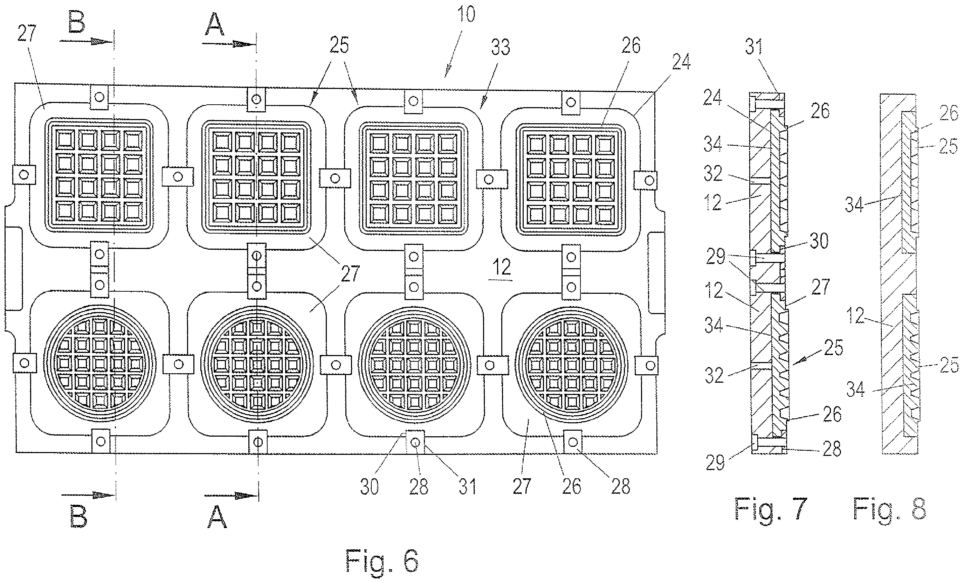

Die in den Figuren 6 bis 8 dargestellte obere Backplatte ist weitgehend gleich ausgebildet wie die untere Backplatte gemäß den Figuren 3 bis 5. Unterschiedlich ist hier die Gravur der Backform, die bei der oberen Backplatte gegenüber der Backflächenseite der Trägerplatte hervorsteht, wohingegen die Backform gemäß den Figuren 4 und 5 zurückspringt. Durch diesen Unterschied wird die für den Backvorgang erforderliche Raumgestaltung der geschlossenen Backform gebildet, die den Teig und das gebackene Produkt aufnimmt. Die Gestaltung der Backform kann den Erfordernissen beliebig angepasst sein und daher von diesem Ausführungsbeispiel abweichen.

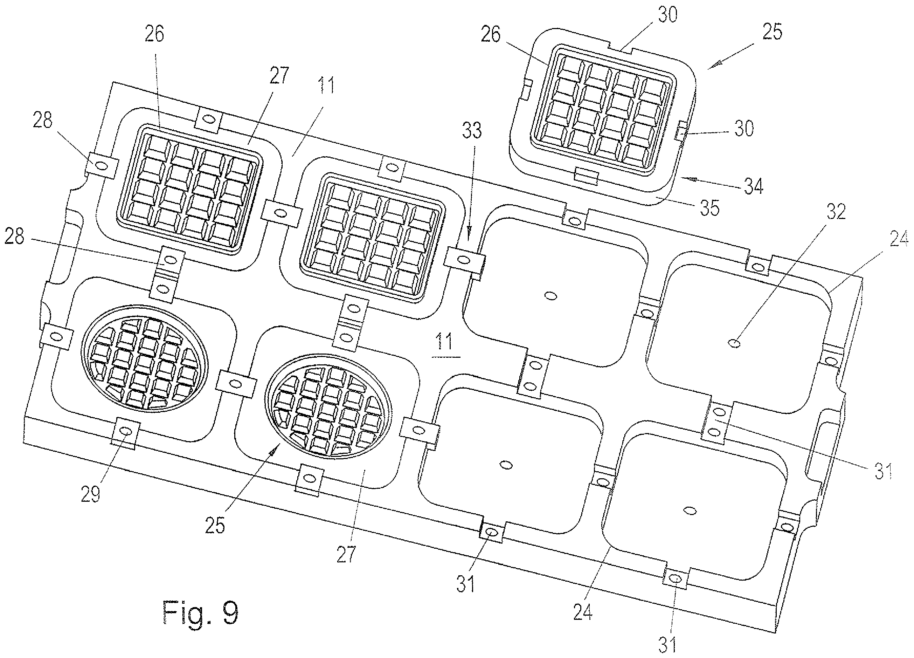

Wie insbesondere der Fig. 9 zu entnehmen ist, weisen die Einsatzausnehmungen 24 Entlüftungslöcher 32 auf, die einerseits das Einsetzen der passgenau ausgebildeten Backeinsätze erleichtern und andererseits auch die Möglichkeit geben, mit einem stabförmigen Werkzeug die Backeinsätze aus der Ausnehmung herauszudrücken und damit die Möglichkeit zu geben, schadhafte Backeinsätze auszuwechseln oder die Trägerplatte auf andere Backeinsätze umzurüsten.

Für den guten Wärmeübergang von der massiven Trägerplatte zum Backeinsatz ist es vorteilhaft, wenn dessen Form exakt an die Einsatzausnehmung angepasst ist, dass also alle in der Trägerplatte liegenden Flächen des Backeinsatzes an den korrespondierenden Flächen der Einsatzausnehmung anliegen. Weiters kann es vorteilhaft sein, wenn die Wandstärken der Backeinsätze klein sind, insbesondere jene der Bodenfläche 34.

Die äußere Kontur der Backeinsätze kann auch abweichend von der hier dargestellten runden oder viereckigen Form sein. Auch im Querschnitt kann die Formgebung der Backeinsätze und der zugehörigen Einsatzausnehmungen von der dargestellten Form abweichen. Beispielsweise kann der Winkel zwischen den Seitenflächen 35 und der Bodenfläche 34 auch abweichend von 90° sein, insbesondere einen Winkel > 90° aufweisen. Die Form der Einsatzausnehmung muss dem angepasst sein, um einen guten Wärmefluss zu gewährleisten.

Gemäß Erfindung sind die Backeinsätze aus Sinterkeramik mit hoher Zähigkeit und geringer Wärmedehnung gebildet. Bevorzugt bestehen Sie aus Siliziumnitrid oder Siliziumkarbid, und insbesondere bevorzugt aus gasdruckgesintertem Siliziumnitrit vom Typ Al/Y, Die Backeinsätze sollen einen Wärmeausdehnungskoeffizienten α von < 9 [10⁻6 x K⁻1] bezogen auf den Temperaturbereich 20° bis 200° aufweisen.

Ein Sinterprodukt mit folgenden Daten hat sich in der Praxis als vorteilhaft herausgestellt:

### Chemische Zusammensetzung:

- Si₃N₄ 90 %
- -Al₂O₃ 6 %
- Y₂O₃ 4 %

### Gefüge:

| | | |
|---|---|---|
| Rohdichte | 3,21 | [g/cm³] |
| Offene Porosität | 0 | [%] |
| Korngröße | 1-10 | [µm] |

### Unter den mechanischen Eigenschaften ist hervorzuheben:

| | | |
|---|---|---|
| Bruchzähigkeit | 8 | [Mpam^{1/2}] |
| Elastizitätsmodul | 320 | [GPa] |
| Poissonzahl | 0,28 | |

### Thermische Eigenschaften:

| | | |
|---|---|---|
| Wärmeleitfähigkeit (20°C) | 30 | [W/mK] |
| Wärmeausdehnungskoeffizient α (-1000°C) | | [10⁻6K⁻1] |

Die Herstellung der Backeinsätze aus diesem Werkstoff erfolgt nach Stand der Technik für gasdruckgesintertes Siliziumnitrid.

Andere technische Keramiken können ebenfalls für das Herstellen der Backeinsätze verwendet werden wie beispielsweise das Siliziumkarbid, welches für den Backprozess vergleichbare gute Eigenschaften aufweist. Der Nachteil von Siliziumkarbidkeramik liegt allerdings in der höheren Sprödigkeit mit der damit verbundenen größeren Bruchgefahr. Zur Herstellung der Trägerplatten wurde Grauguss mit der Bezeichnung EN-GJS-400-15 verwendet. Dieses Material weist eine etwas höhere Wärmeleitfähigkeit von 36,2 (W/MK) (300°C) auf und auch der Wärmeausdehnungskoeffizient α liegt mit 12,5 (10⁻6 x K⁻1) höher. Durch diesen höheren Wärmeausdehnungskoeffizient wird sichergestellt, dass bei den im Ofen auftretenden Backtemperaturen der Backeinsatz nicht beschädigt wird, da er genügend Platz für seine Wärmeausdehnung bekommt, wobei dessen Wärmeausdehnungskoeffizient äußerst niedrig ist.

### Bzgz

- 1: Backofen
- 2: Vordere Ofenhäifte
- 3: Backzange
- 4: Backzangenkette
- 5: Transportbahn, obere
- 6: Transportbahn, untere
- 7: Ofengestell
- 8: Hintere Ofenhälfte
- 9: Untere Backplatte
- 10: Obere Backplatte
- 11: Untere Trägerplatte
- 12: Obere Trägerplatte
- 13: Unteres Trägergestell
- 14: Oberes Trägergestell
- 15: Gelenk
- 16: Rolle
- 17: Steuerrolle
- 18: Ausgabestation
- 19: Eingabestation
- 20: Einrichtung zum Öffnen und Schließen der Backzangen
- 21: Backraum
- 22: Obere Backzone
- 23: Untere Backzone
- 24: Einsatzausnehmung
- 25: Backeinsatz
- 26: Dichtrippe
- 27: Seitenwand
- 28: Laschen
- 29: Schraubbolzen
- 30: Randausnehmung
- 31: Ausnehmung
- 32: Entlüftungsloch
- 33: Backflächenseite
- 34: Bodenfläche
- 35: Seitenfläche

## Patentansprüche

1. Backplatte für Backöfen zur Erzeugung von Backprodukten wie Softwaffeln, knusprige Waffeln, Pfannkuchen und dergleichen, wobei die Backplatte (9, 10) eine Trägerplatte (11, 12) und ein oder mehrere an dieser angeordnete Backeinsätze (25) aufweist, die in Einsatzausnehmungen der Trägerplatte eingesetzt und die zur Aufnahme des zu backenden Teiges ausgebildet sind, wobei die Trägerplatte (11, 12) Teil einer Backzange (3) ist, die eine untere und eine obere Backplatte (9, 10) aufweist und wobei die Trägerplatte (11, 12) mit der Backzange (3) durch eine Eingabestation (19), den beheizten Backraum (21) und eine Ausgabestation (18) bewegbar ist, **dadurch gekennzeichnet, dass** die Backeinsätze (25) aus Sinterkeramik in Form von Siliziumnitrit oder Siliziumkarbid mit hoher Zähigkeit, vorzugsweise 8MPa/m2, und geringer Wärmeausdehnung, vorzugsweise 9 x 10-3K-1 für einen Temperaturbereich von 20 bis 200°C, gebildet sind und die Trägerplatte (11, 12) aus einem Material, bevorzugt Metall, besonders bevorzugt Grauguß gebildet ist, dessen Wärmedehnung gleich oder größer als die Wärmedehnung der Backeinsätze (25) ist, dass die Einsatzausnehmungen (24) in der Trägerplatte (11, 12) zur Aufnahme der Backeinsätze (25) mit geringem Spiel ausgebildet sind, sodass die Backeinsätze passgenau einsetzbar und wieder herausnehmbar sind, und dass jede Einsatzausnehmung (24) ein Entlüftungsloch (32) aufweist.

2. Backplatte nach Anspruch 1, **dadurch gekennzeichnet, dass** die Backeinsätze (25) einen Wärmeausdehnungskoeffizienten α < 9
[10⁻⁶ x K⁻¹] und die Trägerplatte einen Wärmeausdehnungskoeffizienten α > 9 [10⁻⁶ x K⁻¹] für den Temperaturbereich 20 bis 200°C aufweisen.

3. Backplatte nach einem der Ansprüche 1 bis 2, **dadurch gekennzeichnet, dass** die Backeinsätze (25) einen Wärmeausdehnungskoeffizienten von etwa 3,2 [10⁻⁶ x K⁻¹] und die Trägerplatte einen Wärmeausdehnungskoeffizienten von etwa 12,5 [10⁻⁶ x K⁻¹] aufweisen.

4. Backplatte nach einem der Ansprüche 1 bis 3, **dadurch gekennzeichnet, dass** die Backeinsätze (25) aus gasdruckgesintertem Siliziumnitrit vom Typ Al/Y gebildet sind.

5. Backplatte nach einem der Ansprüche 1 bis 4, **dadurch gekennzeichnet, dass** die Backeinsätze (25) an der Backflächenseite (33) mit der für das Backprodukt gewünschten Oberflächengestaltung und einer umlaufenden Dichtrippe (26), sowie einem umlaufenden Seitenrand (27) versehen sind.

6. Backplatte nach einem der Ansprüche 1 bis 5 **dadurch gekennzeichnet, dass** die Backeinsätze (25) in den Einsatzausnehmungen (24) durch Laschen (28) festgehalten sind, die mit der Trägerplatte (11, 12) fest, bevorzugt durch Schraubbolzen (29), verbunden und den Seitenrand (27) der Backeinsätze (25) übergreifend angeordnet sind.

7. Backplatte nach Anspruch 6, **dadurch gekennzeichnet, dass** der Seitenrand (27) für jede Lasche (28) eine Randausnehmung (30) aufweist.

8. Backplatte nach einem der Ansprüche 6 oder 7, **dadurch gekennzeichnet, dass** für jeden Backeinsatz (25) zumindest zwei, bevorzugt drei oder vier Laschen (28) und Randausnehmungen (30) vorgesehen sind.

9. Backplatte nach einem der Ansprüche 6 bis 8, **dadurch gekennzeichnet, dass** die Laschen (28) aus Metall, bevorzugt aus rostfreiem Stahl gebildet sind.

10. Backplatte nach einem der Ansprüche 1 bis 9, **dadurch gekennzeichnet, dass** die Backplatten (9, 10) einer Backzange (3) in je einem Traggestell (12, 13) angeordnet sind und das untere und obere Traggestell über ein Gelenk (15) miteinander verbunden sind.

11. Backplattenzange mit Backplatten (9,10) nach einem der Ansprüche 1 bis 10, die eine untere und eine obere Backplatte aufweist, wobei deren Backeinsätze (25) einander gegenüberliegend angeordnet sind, sodass nach dem Schließen der Backzange (3) zwischen den einander zugeordneten Backeinsätzen der Raum für den Teig und für das daraus gebildete Backprodukt gebildet ist.

12. Backofen mit einer durch den Backraum (21) führenden Umlaufbahn für die Backplatten und einer Fördereinrichtung für die Backplatten, **dadurch gekennzeichnet, dass** die Backplatten nach einem oder mehreren der Ansprüche 1 bis 11 ausgebildet sind.

## Claims

1. Baking plate for baking ovens for producing baked products such as soft waffles, crispy wafers, pancakes and the like, wherein the baking plate (9, 10) comprises a carrier plate (11, 12) and one or more baking inserts (25) disposed thereon, which are inserted in insertion recesses of the carrier plate and which are configured for receiving the dough to be baked, wherein the carrier plate (11, 12) is part of a baking tong (3) which comprises a lower and an upper baking plate (9, 10), and wherein the carrier plate (11, 12) with the baking tong (3) is movable through an input station (19), the heated baking chamber (21) and an output station (18), **characterized in that** the baking inserts (25) are formed from sintered ceramic in the form of silicon nitride or silicon carbide having high toughness, preferably 8 MPa/m² and low thermal expansion, preferably 9 × 10⁻³ K⁻¹ for a temperature range of 20 to 200°C, and the carrier plate (11, 12) is formed from a material, preferably metal, particularly preferably grey cast iron, whose thermal expansion is equal to or greater than the thermal expansion of the baking inserts (25), that the insertion recesses (24) in the carrier plate (11, 12) for receiving the baking inserts (25) are formed with small play so that the baking inserts can be inserted with a precise fit and can be removed again, and that each insertion recess (24) has a ventilation hole (32).

2. The baking plate according to claim 1, **characterized in that** the baking inserts (25) have a coefficient of thermal expansion α < 9 [10⁻⁶ x K⁻¹] and the carrier plate has a coefficient of thermal expansion α > 9 [10⁻⁶ x K⁻¹] for the temperature range of 20 to 200°C.

3. The baking plate according to any one of claims 1 to 2, **characterized in that** the baking inserts (25) have a coefficient of thermal expansion of about 3.2 [10⁻⁶ x K⁻¹] and the carrier plate has a coefficient of thermal expansion of about 12.5 [10⁻⁶ x K⁻¹].

4. The baking plate according to any one of claims 1 to 3, **characterized in that** the baking inserts (25) are formed from gas-pressure-sintered silicon nitride of the type Al/Y.

5. The baking plate according to any one of claims 1 to 4, **characterized in that** the baking inserts (25) on the baking surface side (33) are provided with the desired surface design for the baked product and a circumferential sealing rib (26) as well as a circumferential lateral edge (27).

6. The baking plate according to any one of claims 1 to 5, **characterized in that** the baking inserts (25) are held firmly in the insertion recesses (24) by lugs (28) which are firmly connected to the carrier plate (11, 12), preferably by screw bolts (29) and are arranged to overlap the lateral edge (27) of the baking inserts (25).

7. The baking plate according to claim 6, **characterized in that** the lateral edge (27) has an edge recess (30) for each lug (28).

8. The baking plate according to any one of claims 6 or 7, **characterized in that** for each baking insert (25) at least two, preferably three or four lugs (28) and edge recesses (30) are provided.

9. The baking plate according to any one of claims 6 to 8, **characterized in that** the lugs (28) are formed of metal, preferably of stainless steel.

10. The baking plate according to any one of claims 1 to 9, **characterized in that** the baking plates (9, 10) of a baking tong (3) are arranged in respectively one supporting frame (12, 13) and the lower and upper supporting frame are interconnected via a joint (15).

11. Baking oven tong having baking plates (9, 10) according to any one of claims 1 to 10, comprising a lower and an upper baking plate, wherein the baking inserts (25) thereof are arranged opposite to one another so that after closure of the baking tong (3) the space for the dough and for the baked product formed therefrom is formed between the baking inserts assigned to one another.

12. Baking oven having an orbit track leading through the baking chamber (21) for the baking plates and a conveying device for the baking plates, **characterized in that** the baking plates are formed according to one or more of claims 1 to 11.

## Revendications

1. Plaque de cuisson destinée à des fours, pour créer des pâtisseries comme des gaufres belges, des gaufres croustillantes, des crêpes et similaires, la plaque de cuisson (9, 10) comportant une plaque de support (11, 12), et un ou plusieurs inserts de cuisson (25) placés sur celle-ci, qui sont insérés dans des évidements d'insertion de la plaque de support et qui sont conçus pour recevoir la pâte à cuire, la plaque de support (11, 12) étant un élément d'un pince à pâtisserie (3) qui comporte une plaque de cuisson (9, 10) supérieure et inférieure et la die plaque de support (11, 12) avec la pince à pâtisserie (3) étant déplaçable à travers un poste d'introduction (19), l'espace de cuisson (21) préchauffé et un poste de sortie (18), **caractérisée en ce que** les inserts de cuisson (25) sont conçus en céramique frittée sous la forme de nitrure de silicium ou de carbure de silicium à haute ténacité, de préférence de 8MPa/m², et à faible dilatation thermique, de préférence de9 x 10-3K-1 pour un ordre de température d'environ 20 à 200°C, et la plaque de support (11, 12) étant conçue en un matière, de préférence en métal, de manière particulièrement préférentielle en fonte grise, dont la dilatation thermique est supérieure ou égale à la dilatation thermique des inserts de cuisson (25), **en ce que** les évidements d'insertion (24) dans la plaque de support (11, 12) sont conçus pour loger les inserts de cuisson (25) avec un faible jeu, de sorte que les inserts de cuisson puissent s'insérer et se retirer de manière ajustée et **en ce que** chaque évidement d'insertion (24) comporte un trou de purge (32).

2. Plaque de cuisson selon la revendication 1, **caractérisée en ce que** les inserts de cuisson (25) font preuve d'un coefficient de dilatation thermique α, < 9 [10⁻⁶ x K⁻¹ ] et la plaque de support fait preuve d'un coefficient de dilatation thermique α, < 9 [10⁻⁶ x K⁻¹] pour la plage de température de 20 à 200°C.

3. Plaque de cuisson selon l'une quelconque des revendications 1 à 2, **caractérisée en ce que** les inserts de cuisson (25) font preuve d'un coefficient de dilatation thermique d'environ 3,2 [10⁻⁶ x K⁻¹] et la plaque de support preuve d'un coefficient de dilatation thermique d'environ 12,5 [10⁻⁶ x K⁻¹].

4. Plaque de cuisson selon l'une quelconque des revendications 1 à 3, **caractérisée en ce que** les inserts de cuisson (25) sont conçus en nitrure de silicium fritté sous pression de gaz de type Al/Y.

5. Plaque de cuisson selon l'une quelconque des revendications 1 à 4, **caractérisée en ce que** les inserts de cuisson (25) sont dotés sur le côté de la surface de cuisson (33) de la structure superficielle souhaitée pour le produit de cuisson et d'une nervure d'étanchéité (26) périphérique, ainsi que d'un bord latéral (27) périphérique.

6. Plaque de cuisson selon l'une quelconque des revendications 1 à 5, **caractérisée en ce que** les inserts de cuisson (25) sont immobilisés dans les évidements d'insertion (24) par des pattes (28) qui sont assemblées solidement sur la plaque de support (11, 12), de préférence par des boulons filetés (29) et sont placées en chevauchant le bord latéral (27) des inserts de cuisson (25).

7. Plaque de cuisson selon la revendication 6, **caractérisée en ce que** le bord latéral (27) comporte pour chaque patte (28) un évidement marginal (30).

8. Plaque de cuisson selon l'une quelconque des revendications 6 ou 7, **caractérisée en ce que** pour chaque insert de cuisson (25) sont prévus au moins deux, de préférence trois ou quatre pattes (28) et évidements marginaux (30).

9. Plaque de cuisson selon l'une quelconque des revendications 6 à 8, **caractérisée en ce que** les pattes (28) sont conçues en métal, de préférence en acier inoxydable.

10. Plaque de cuisson selon l'une quelconque des revendications 1 à 9, **caractérisée en ce que** les plaques de cuisson (9, 10) d'une pince à pâtisserie (3) sont placées dans chaque fois une structure de support (12, 13) et les structures de support inférieure et supérieure sont assemblées l'une à l'autre par l'intermédiaire d'une articulation (15).

11. Pince à plaques de cuisson avec des plaques de cuisson (9, 10) selon l'une quelconque des revendications 1 à 10, qui comporte une plaque de cuisson inférieure et supérieure, ses inserts de cuisson (25) étant placés en étant mutuellement opposés, de sorte qu'après la fermeture de la pince à pâtisserie (3), entre les inserts de cuisson mutuellement associés soit formé l'espace pour la pâte et pour le produit de pâtisserie formé à partir de cette dernière.

12. Four avec une trajectoire périphérique menant à travers l'espace de cuisson (21) pour la plaque de cuisson, et un système de transport pour les plaques de cuisson, **caractérisé en ce que** les plaques de cuisson sont conçues selon l'une quelconque ou plusieurs des revendications 1 à 11.
